Europäisches Patentamt

European Patent Office

Office européen des brevets

(19)

(11) Veröffentlichungsnummer: **0 144 002**
**B1**

(12) **EUROPÄISCHE PATENTSCHRIFT**

(45) Veröffentlichungstag der Patentschrift:
18.01.89

(21) Anmeldenummer: 84113239.2

(22) Anmeldetag: 03.11.84

(51) Int. Cl.⁴: **H 01 M 4/98,** H 01 M 4/88,
H 01 M 8/06, C 25 B 11/04

(54) **Poröse Gaselektrode.**

(30) Priorität: 28.11.83 DE 3342969

(43) Veröffentlichungstag der Anmeldung:
12.06.85 Patentblatt 85/24

(45) Bekanntmachung des Hinweises auf die Patenterteilung:
18.01.89 Patentblatt 89/3

(84) Benannte Vertragsstaaten:
CH DE FR GB IT LI

(56) Entgegenhaltungen:
EP-A- 0 089 141
EP-A- 0 120 548
DE-A- 1 806 703
FR-A- 1 296 372
FR-A- 2 061 527

CHEMICAL ABSTRACTS, Band 76, Nr. 26, 26. Juni 1972,
Seite 577, Zusammenfassung Nr. 161530g, Columbus,
Ohio, US; W. RUMMEL: "Preparation and properties of
PTFE-bound electrodes made from Raney catalysts", &
JOURNEES INT. ETUDE PILES COMBUST., C.R., 3rd
1969, 191-3
BULLETIN OF THE CHEMICAL SOCIETY OF JAPAN,
Band 54, 1981, Seiten 2553-2556, The Chemical Society
of Japan, Tokyo, JP; T. KENJO: "PTFE-bonded Raney
nickel hydrogen electrodes in alkaline fuel cells"

(73) Patentinhaber: VARTA Batterie Aktiengesellschaft, Am
Leineufer 51, D-3000 Hannover 21 (DE)

(72) Erfinder: Winsel, August, Prof. Dr., Fasanenstrasse 8a,
D-6233 Kelkheim (DE)

(74) Vertreter: Kaiser, Dieter Ralf, Dipl.-Ing.,
Gundelhardtstrasse 72 Postfach 16 20,
D-6233 Kelkheim/Ts. (DE)

## Beschreibung

Die Erfindung betrifft eine poröse Gaselektrode, insbesondere für Elektrolyseure und Brennstoffelemente, welcher eine durch Polytetrafluoräthylen gebundene Raneynickelstruktur zugrundeliegt, sowie ein Verfahren zur Herstellung dieser Elektrode.

Wasserstoffelektroden, die als Katalysator für die anodische Wasserstoffredukion Raneynickel enthalten, sind bislang so gut wie ausschliesslich Erzeugnisse einer Pulvermetallurgie geblieben, denn gerade für die Herstellung von porösen Körpern mit grosser innerer Oberfläche hatten sich pulvermetallurgische Verfahren als besonders geeignet gezeigt.

Eine bekannte und namentlich in Ñiederdruck-Knallgaszellen viel verwendete Elektrodenausführung ist die Doppelskelett-Katalysator-Elektrode (DSK) gemäss DE-PS 1 019 361. Sie besteht aus einem metallischleitenden Stützgerüst, gewöhnlich ein zusammengesintertes oder heissverpresstes Nickelpulver, in welches hochaktive Katalysatorkörner aus Raneynickel eingelagert sind.

Den Vorteilen einer solchen Elektrode, die sich – materialbedingt – in einer grossen mechanischen Festigkeit sowie in hoher metallischer, thermischer und elektrischer Leitfähigkeit äussern, steht der Nachteil des gewichtsaufwendigen und elektrochemisch inaktiven Sinterträgers gegenüber. Auch volumenmässig kann die relativ grosse Stützgerüstmasse ein erheblicher Ballast sein, wenn sich das Anwendungsgebiet der Elektrode z.B. auch auf alkalische Akkumulatoren erstrekken soll und sie dort als negative Elektrode ein möglichst gutes Speichervermögen für Wasserstoff aufweisen muss. Aus den eben genannten Gründen wäre die auf das Volumen bezogene Wasserstoffkapazität dann nicht sehr günstig.

Auch bei einer aus der EP-A 89 141 bekannten Legierungselektrode für die elektrolytische Erzeugung von Wasserstoff wird eine für diesen Zweck sehr günstige Eigenschaft, nämlich eine geringe Wasserstoff-Abscheidungsüberspannung aufgrund eines zu Hydridbildung befähigten Legierungsmaterials, z.B. $LaNi_5$, durch einen erheblichen Gewichtsanteil des beim Versintern als metallischer Binder fungierenden Nickels (gegebenenfalls auch Eisen) erkauft. Dieser Ballast bleibt der Legierungselektrode auch dann erhalten, wenn ein Kunststoff-Binder zu ihrer Verfestigung dient und eine zusätzliche Armierung aus einem Nickeldrahtgewebe ihre Handhabung erleichtert.

Als Abhilfe wurde in der US-PS 3 409 474 bereits eine Elektrode vorgeschlagen, die aus einem porösen Körper aus einem Thermoplasten mit eingearbeiteten Raneymetall besteht, wobei im Falle der Verwendung dieser Elektrode in Brennstoffelementen ein geeignetes Thermoplast u.a. Polytetrafluoräthylen ist. Ferner ist eine Katalysator-Elektrode aus PTFE-gebundenem Raney-Nickel aus den Chemical Abstracts, Band 76, Nr. 26, Seite 577, Nr. 161 530 g bekannt.

Das Betriebsverhalten der bekannten Elektroden liess jedoch noch Wünsche offen, so dass die Aufgabe bestand, Massnahmen zu ergreifen, durch welche eine gesteigerte mechanische Robustheit und eine bessere Strombelastbarkeit sichergestellt werden können.

Die Aufgabe wird erfindungsgemäss dadurch gelöst, dass sie eine Folie ist, die durch Zusammenwalzen einer Trockenmischung aus Polytetrafluoräthylen und einem gegen Luftoxidation konservierten Raneynickelpulver mit einem Nickelgewebenetz gebildet ist.

Der Aufbau der erfindungsgemässen Gaselektrode wird im folgenden anhand des Herstellungsprozesses näher erläutert.

Die Grundmaterialien, Polytetrafluoräthylen (fortan PTFE) und Raneynickelpulver in konservierter Form, werden zunächst unter Verwendung eines speziellen Schaufelmischers trocken gemischt, wobei der Gewichtsanteil des PTFE an der Trockenmischung 2 bis 12%, vorzugsweise etwa 5 bis 8% beträgt.

Da gewöhnliches Raneynickel, welches aus einer heterogenen Ni/Al-Legierung durch Herauslösen des Aluminiums mittels starker Alkalilauge hervorgeht, wegen der Aufnahme des dabei entstehenden Wasserstoffs in das Nickel-Gitter pyrophor ist und eine Montage von Zellen oder Batterien, deren Elektroden einen solchen Katalysator enthalten, nur unter Luftabschluss durchgeführt werden kann, ist für das erfindungsgemäss einzusetzende Raneynickel eine Konservierung gegen Luftoxidation vorgesehen, die eine gefahrlose Verarbeitung sichert. Zu diesem Zweck wird das Katalysator-Pulver nach dem Aktivieren entweder im alakisch-wässrigen Milieu belassen und einer gezielten anodischen Oxidation unterworfen oder es wird nach vorhergehender Wäsche und eventueller Aceton-Trocknung der Einwirkung von $H_2O_2$, von Halogensauerstoffsäuren oder Luft ausgesetzt. Es besteht somit die Auswahl zwischen einer elektrochemischen und einer chemischen Konservierung. Einzelheiten der praktischen Durchführung können der Zeitschrift Chemie-Ingenieur-Technik 40 (1968), Heft 4, Seiten 176–180 (H.H. v. Döhren, A. Kalberlah: Raney-Nickel als Katalysator in galvanischen Brennstoffzellen) entnommen werden.

Bei besagtem speziellen Mischer rotieren Schaufeln, die an den gegenüberliegenden Enden einer motorgetriebenen Welle befestigt sind, mit einer Geschwindigkeit von ca. 80 U/min in zwei parallelen Ebenen innerhalb eines liegenden zylindrischen Gehäuses, dessen Zylinderachse mit der Schaufelwelle zusammenfällt. Eine zweite motorgetriebene Welle, die senkrecht zur Schaufelwelle und zwischen den Rotationsebenen der Schaufeln angeordnet ist, trägt einen Schneidkopf aus scharfen Messern und rotiert mit extrem hoher Geschwindigkeit. Die Messer können dabei eine Umfangsgeschwindigkeit von ca. 25 m/sec oder mehr erreichen, wenn man davon ausgeht, dass sie einen Durchmesser bzw. eine Länge von ca. 150 mm besitzen und die Tourenzahl des Motors ca. 3000 U/min beträgt.

Unter diesen Voraussetzungen treffen die Schneidkanten der Messer auf die Mischungsteilchen mit derartiger Intensität, dass die noch vorhandenen PTFE-Agglomerate gecrackt werden und die Spaltstücke sich auf dem Raneynickel niederschlagen. Die Aussenbezirke der Katalysatorkörner werden somit von einem feinmaschigen hydrophoben Netzsystem des PTFE überzogen.

Die Weiterverarbeitung der fertigen Mischung erfolgt in einer Pulverwalze, wobei die lose geschüttete Aktivmasse zu einer Folie von ca. 0,2 mm Dicke zusammengewalzt wird. Hierbei bewirkt das erwähnte PTFE-Netzsystem eine Haftung der Katalysatorpartikel untereinander. Gleichzeitig bildet dieses hydrophobe Netzsystem jedoch auch die Kanäle zum Transport des Gases aus, während die hydrophil verbleibenden Innenbezirke der Katalysatoren den Elektrolyten aufsaugen. Es entstehen auf diese Weise stromliefernde Dreiphasengrenzen in den Nahbereichen der Porenmündungen der Katalysatorporen zum Gas hin. Dabei korrespondieren die Katalysatorkörner untereinander, indem sie ein zusammenhängendes System von elektrolytführenden Poren und ausserdem elektronisch leitenden Wegen bilden, in welchem der Elektrolyt strömungsfähig ist.

Die Raneynickel-PTFE-Folie wird dann in einem zweiten Walzenstuhl mit einem synchron zugeführten Nickelgewebenetz zusammengewalzt. Das Nickelnetz besitzt eine Maschenweite von beispielsweise 0,224 mm und eine Dicke von 0,1 mm. Es gewährleistet den Elektronentransport über weite Strecken entlang der dünnen hydrophil-hydrophoben Elektrodenschicht. Besonders vorteilhaft ist es, wenn dem netzarmierten Folienband noch eine poröse hydrophobierende PTFE-Schicht aufgewalzt ist, wie es im allgemeinen auch der Schichtenstruktur von Luftsauerstoffelektroden entspricht. Die komplette Wasserstoffelektrode gemäss der Erfindung erreicht damit eine Gesamtdicke von etwa 0,5 mm.

Beispiel: Von einem Gesamtgewicht der Wasserstoffelektrode von 1,95 kg/m$^2$ entfallen etwa 0,32 kg/m$^2$ auf die PTFE-Schicht, 1,18 kg/m$^2$ auf die PTFE-gebundene Raneynickel-Schicht und 0,45 kg/m$^2$ auf das Nickelgewebenetz. Die PTFE-gebundene Raneynickel-Schicht besteht zu 1,12 kg/m$^2$ aus Raneynickel und zu 0,06 kg/m$^2$ aus PTFE-Pulver.

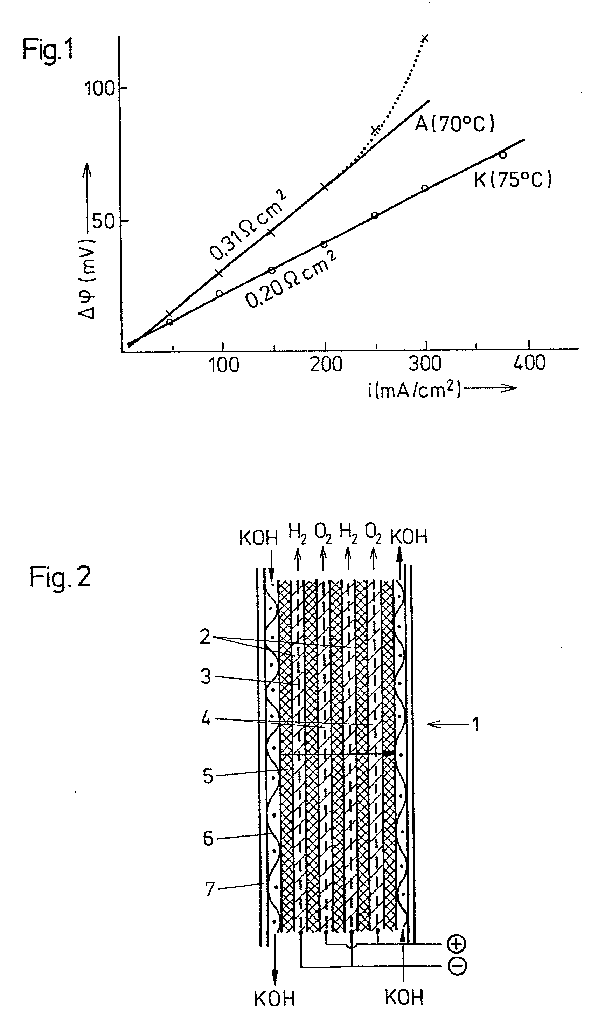

Zur Ermittlung des elektrischen Verhaltens der erfindungsgemässen Wasserstoffelektrode wurden die anodische und die kathodische Strom-Spannungs-Kennlinie im Temperaturbereich um 70 °C aufgenommen. Zu diesem Zweck wurden aus dem Folienmaterial kreisförmige Elektroden ausgestanzt und mit einer offenen, zum Elektrolyten hinweisenden Oberfläche von 6 cm$^2$ in Plexiglashalterungen mit einer rückwärtigen Gaszuführung eingebaut. Zur Reaktivierung des konservierten Raneynickels wurden die Elektroden zunächst durch entsprechende kathodische Polarisierung auf das $H_2$-Potential (alkalische Lösung) gebracht und leicht über Zimmertemperatur erwärmt. Der Betriebsdruck, der im allgemeinen einem Überdruck von 1 cm Ws (Wassersäule) entsprach, konnte bei 70 °C bis zu 7 cm Ws ansteigen, ohne dass Gasblasen aus der elektrolytseitigen Oberfläche austraten. In Figur 1 ist die anodische Kennlinie A ($H_2$-Auflösung) bei 70 °C und die kathodische Kennlinie K ($H_2$-Abscheidung) bei 75 °C dargestellt.

Aufgetragen ist die Polarisation $\Delta\varphi$(mV) als Funktion der Stromdichte j (mA/cm$^2$). Während bei der Funktion als Anode keine Gasblasen aus der Elektrode heraustreten, findet in der Kathodenfunktion auch eine Abscheidung an der elektrolytseitigen Fläche statt, d.h. es bilden sich dort Blasen, aber ein grosser Teil des Gases wird auch auf der Gasseite gegen den Überdruck von 1 cm Ws abgegeben.

Sowohl die anodische als auch die kathodische Kennlinie zeigen bis zu 200 mA/cm$^2$ lineares Verhalten zwischen Polarisation und Stromdichte. Oberhalb von 200 mA/cm$^2$ weichen die Messwerte bei der anodischen Belastung zu höheren Polarisationen ab, während die kathodischen Abscheidungswerte noch linear weiterverlaufen. Das Verhalten der Elektrode ist also in beiden Richtungen quasi ohmisch. Dies lässt vermuten, dass innerhalb der Elektrodenpolarisation infolge des notwendigen Eindringens des Stromes in das mikroporöse System der Katalysatoren auch ein erheblicher Anteil von Elektrolytwiderstand steckt. Dieser Elektrolytwiderstand ist aber ein nicht vermeidbarer Polarisationsanteil der Elektrode.

Dass er sich bei der erfindungsgemässen Elektrode dennoch in minimalen Grenzen hält, zeigt die folgende Betrachtung.

Rechnet man nämlich aus der Steigung den entsprechenden Flächenwiderstand aus, der sich auch als Polarisationswiderstand ergibt, wenn man die Polarisation $\Delta\varphi$ in mV durch die Stromdichte j in mA/cm$^2$ dividiert, so findet man für die anodische Reaktion bei 70 °C einen Widerstand von 0,31 $\Omega$cm$^2$, hingegen für die Abscheidung bei 75 °C einen Widerstand von 0,2 $\Omega$cm$^2$.

Da aufgrund von Leitfähigkeitsmessungen an Kalilauge für eine 6–12n Lauge bei 70 °C ein spezifischer Widerstand von rund 1 $\Omega$cm anzusetzen ist, bedeutet dies, dass der Flächenwiderstand der $H_2$-Elektrode dem Widerstand einer 2–3 mm dicken Elektrolytschicht entspricht. Man kann etwa damit rechnen, dass 50% des Elektrodenvolumens in den feinen Poren des Raneynickels vorliegen. Der Querschnitt der elektrolytführenden Poren erfüllt also höchstens 50% der vorhandenen Elektrodenquerschnittsfläche. Ausserdem aber macht der Strom innerhalb der Katalysatorporen einen Umweg entsprechend dem Umwegfaktor, für den man Werte in der Gegend von 2 annehmen kann. Dies bedeutet dann, dass nach roher Abschätzung der Widerstand einer Elektrodenschicht der Dicke d, wenn sie als Diaphragma vom Strom durchflossen wird, mindestens um den Faktor 4 grösser ist als der Widerstand einer Elektrolytschicht der Dicke d. Da die erfindungsgemässe Elektrode ca. 0,5 mm dick ist, muss man erwarten, dass sie einen Diaphragmenwiderstand hat, der mindestens gleich dem Widerstand einer 4mal so dicken, d.h. etwa 2 mm dicken Elektrolytschicht ist. Dieser Wert korrespondiert recht gut mit den aus der Steigung der anodischen und der kathodischen Kennlinie berechneten Werten des Flächenwiderstandes.

Verfahrenstechnische Anwendungsmöglichkeiten der erfindungsgemässen Elektrode bestehen in der Brennstoffzellentechnik und in der Elektrolysetechnik zumindest für die $H_2$- und $O_2$-Entwicklungsseite; daneben können derartige Elektroden in elektrodialytischen Prozessen mit $H_2/H_2$-Zellen eingesetzt werden, d.h. in all den Fällen, in denen bisher eine Elektrolyse mit der Elektrodialyse verbunden ist. Die Elektrolyse ist dabei ein im wesentlichen energieverzehrender Prozess; abgesehen davon, dass die Knallgasentstehung in vielen Fällen anlagetechnisch unerwünscht ist.

In der Batterietechnik bietet sich eine Verwendung der erfindungsgemässen Elektrode als $H_2$-Verzehrelektrode an. Damit verbindet sich die Möglichkeit, statt eines $O_2$-Verzehrzyklus einen $H_2$-Verzehrzyklus einzuführen. Der $H_2$-Verzehrzyklus hat den Vorteil, dass er im allgemeinen den Volladungszustand der Zellen garantiert. Deshalb sind früher schon Vorschläge über den Einsatz von $H_2$-Verzehrelektroden in alkalischen Zellen des Ni/Cd-Typs gemacht worden. Mit der neuen Wasserstoffelektrode steht jedoch eine äusserst preisgünstige Version zur Verfügung, mit der die Lösung dieser Aufgabe verfolgt werden kann.

Eine besonders vorteilhafte verfahrenstechnische Anwendung der neuen Elektrode liegt in der Nitratbeseitigung aus der Fällauge der Sinterelektrodenfertigung. Eine mit $H_2$ versorgte $H_2$-Elektrode würde die Nitratreduktion zum Ammoniak bewerkstelligen können, ohne dass sie mit der Zuführung von elektrischer Energie verbunden wäre. Die Reaktion verläuft praktisch im Rahmen eines Kurzschlusselementes. Verfahrenstechnisch würde dies bedeuten, dass jeweils zwei $H_2$-Elektroden gasseitig zusammengeschlossen einen $H_2$-Raum bilden, während die elektrolytseitigen Oberflächen zweier Elektroden einen von der Regenerierungslösung durchflossenen Raum bilden. Man erhält also eine Anordnung, die in etwa der Anordnung eines Rekonzentrators in der periodischen Folge von Gasräumen und Elektrolyträumen entspricht.

Die Abführung der Reaktionswärme wird man in jedem Fall über den Elektrolytkreislauf vornehmen, während für die Ammoniakentsorgung aus dem $H_2$ ein $H_2$-Kreislauf mit einer Waschvorrichtung vorzusehen ist. Die $H_2$-Versorgung kann sowohl aus $H_2$-Flaschen als auch aus einem Ammoniakspalter bestehen. Falls ein grosser Teil des gebildeten Ammoniaks in den $H_2$-Kreislauf gelangt, so ist die verfahrenstechnische Weiterverwendung des gebildeten Ammoniaks nach dem Passieren eines Ammoniakspalters eine weitere Möglichkeit zur Optimierung des Verfahrens.

Ein weiteres Feld für den Einsatz der neuen Elektrode sowohl als $H_2$-Anode als auch als $H_2$-Kathode bieten die Prozesse der Elektrodenformation im alkalischen Milieu.

Schliesslich besteht für die erfindungsgemässe Elektrode eine Einsatzmöglichkeit in Wasserstoff/Sauerstoff-Zellen für Elektrolyse und Rekombination, die mit einer erzwungenen Elektrolytströmung arbeiten. Bei diesen bekannten Zellen wird durch Bewegung oder Spülung des Elektrolyten dafür gesorgt, dass elektrolytseitig entstehende Diffusions- bzw. Konzentrations-Polarisationen auf ein Mindestmass begrenzt werden. Die Zuführung der Reaktionsgase erfolgt von den Elektrodenrändern her. Der Aufbau derartiger Zellen ist nach DE-PS 14 96 241 charakterisiert durch die Parallelschaltung dicht aufeinanderliegender $H_2$- und $O_2$-Elektroden mit zwischengeschalteten feinporigen Diaphragmen, die durch totale Elektrolyterfüllung die $H_2$- und $O_2$-Elektroden gasmässig und elektrisch voneinander trennen. Innerhalb der Elektroden ist ebenfalls ein feinporiges, elektrolytdurchzogenes Kapillarsystem vorhanden, wobei sich bei den herkömmlichen DSK-Elektroden Systeme mit grösseren und kleineren Poren durchdringen und in dem gröberen Porensystem wegen seines kleineren Kapillardrucks vorzugsweise die jeweilige Gasphase vorliegt, mit welcher die Elektrode im Brennstoffzellenbetrieb versorgt und von welcher sie im Elektrolysebetrieb entsorgt wird.

Die Versorgung mit Wasser (Elektrolysebetrieb) bzw. die Ausbringung von Reaktionswasser (Brennstoffzellenbetrieb) erfolgt durch die erwähnte Elektrolyt-Strömung (sog. Eloflux-Prinzip), die sich über das durchgehende feinporige, elektrolyterfüllte Porensystem vollzieht und durch den Aufbau eines relativ kleinen Druckgefälles zwischen den begrenzenden Diaphragmen eines solchen Elektrodenpaketes hervorgerufen wird. Gleichzeitig aber dienen diese Endräume, in denen der Elektrolyt schnell fliesst, der Abführung der Reaktionswärme, die im Falle der Elektrolyse nur sehr klein ist, doch im Falle der Brennstoffzelle bis zu 50% der Gesamtleistung ausmacht.

Figur 2 zeigt den schematischen Aufbau einer elektrolytdurchströmten Brennstoffzelle 1, deren Wasserstoffelektroden von der erfindungsgemässen Art sind.

Es entfallen hier sowohl bei den hydrophil-hydrophoben Wasserstoffelektroden 2 aus PTFE-gebundenem Raneynickel mit Nickelnetz 3 als auch bei den Sauerstoffelektroden 4, die herkömmlicher Technik entsprechen, die porösen hydrophobierenden PTFE-Deckschichten. An ihre Stelle treten die hydrophilen Diaphragmen 5 mit hohem Kapillardruck. Das kompakte Elektrodenpaket ist durch Netzeinlagen 6 gegen das Gehäuse 7 abgestützt. Der grosse Pfeil deutet die Richtung der Elektrolytdurchströmung quer zu der Stromrichtung der Gase an.

Durch das hydrophobe gasleitende System innerhalb der neuen $H_2$-Elektroden ist der Spielraum zwischen dem Kapillardruck in den elektrolyterfüllten Katalysatorporen und den gasgefüllten Poren noch erhöht gegenüber der früheren Zellenausführung.

## Patentansprüche

1. Poröse Gaselektrode, insbesondere für Elektrolyseure und Brennstoffelemente, welcher eine durch Polytetrafluoräthylen gebundene Raneynikkelstruktur zugrundeliegt, dadurch gekennzeichnet, dass sie eine Folie ist, die durch Zusammenwalzen einer Trockenmischung aus Polytetrafluoräthylen und einem gegen Luftoxidation konservierten Raneynickelpulver mit einem Nickelgewebenetz gebildet ist.

2. Poröse Elektrode nach Anspruch 1, dadurch gekennzeichnet, dass der Gewichtsanteil des Polytetrafluoräthylens an der Trockenmischung 2 bis 12%, vorzugsweise 5 bis 8%, beträgt.

3. Poröse Elektrode nach den Ansprüchen 1 oder 2, dadurch gekennzeichnet, dass die netzarmierte Raneynickelschicht mit einer zusätzlich aufgewalzten porösen Polytetrafluoräthylen-Schicht versehen ist.

4. Verfahren zur Herstellung einer porösen Elektrode nach den Ansprüchen 1 bis 3, dadurch gekennzeichnet, dass in einem Schaufelmischer eine Trockenmischung aus gegen Luftoxidation konservierten Raneynickelpulver und Polytetrafluoräthylen hergestellt wird und die Mischungsteilchen der zusätzlichen Spaltwirkung schnell rotierender scharfer Messer eines Schneidkopfes ausgesetzt werden, dass die Trockenmischung mittels einer Pulverwalze zu einer dünnen Folie ausgewalzt wird und dass die Folie anschliessend in einem Walzenstuhl in ein Metallgewebe- oder Streckmetallband eingepresst wird.

5. Verfahren nach Anspruch 4, dadurch gekennzeichnet, dass die Umfangsgeschwindigkeit der rotierenden Messer ca. 25 m/sec oder mehr beträgt.

6. Verwendung einer porösen Elektrode nach den Ansprüchen 1 bis 3, bei der elektrolytischen oder katalytischen Nitratbeseitigung aus wässrigen Lösungen, insbesondere aus der Fällauge der Sinterelektrodenfertigung.

7. Verwendung einer porösen Elektrode nach den Ansprüchen 1 bis 3 als Wasserstoff-Verzehrelektrode.

8. Verwendung einer porösen Elektrode nach den Ansprüchen 1 bis 2 in Wasserstoff/Sauerstoff-Brennstoffzellen, die mit erzwungener Elektrolytströmung arbeiten.

9. Verwendung einer porösen Elektrode nach den Ansprüchen 1 bis 3 in Elektrodialysezellen als Wasserstoffanode und Wasserstoffkathode, wobei der durch die kathodische Abscheidung entstehende Wasserstoff der Anode zur elektrochemischen Auflösung zugeführt wird.

10. Verwendung einer porösen Elektrode nach den Ansprüchen 1 bis 3 in Elektrolysezellen als Wasserstoff- und Sauerstoffabscheidungselektrode.

## Claims

1. Porous gas electrode, in particular for electrolyzers and fuel cells, which is based on polytetrafluoroethylene-bound Raney nickel structure, characterized in that it is a foil formed by rolling a dry mixture of polytetrafluoroethylene and a Raney nickel powder protected against atmospheric oxidation together with a woven nickel gauze.

2. Porous electrode according to Claim 1, characterized in that the proportion by weight of polytetrafluoroethylene in the dry mixture is 2 to 12%, preferably 5 to 8%.

3. Porous electrode according to Claim 1 or 2, characterized in that the gauze-reinforced Raney nickel layer is provided with a porous polytetrafluoroethylene layer which is additionally rolled on.

4. Process for producing a porous electrode according to Claims 1 to 3, characterized in that a dry mixture consisting of Raney nickel powder protected against atmospheric oxidation and polytetrafluoroethylene is prepared in a paddle mixer and the mixture particles are subjected to the additional cleavage action of rapidly rotating sharp knives of a cutting head, in that the dry mixture is rolled out into a thin foil by means of a powder roller and in that the foil is then pressed into a woven metal or expanded metal strip in a roller frame.

5. Process according to Claim 4, characterized in that the circumferential velocity of the rotating knives is approx. 25 m/sec or grater.

6. Use of a porous electrode according to Claims 1 to 3 in the electrolytic or catalytic elimination of nitrate from aqueous solutions, in particular from the precipitation liquor of sintered electrode manufacture.

7. Use of a porous electrode according to Claims 1 to 3 as a hydrogen consuming electrode.

8. Use of a porous electrode according to Claims 1 to 2 in hydrogen/oxygen fuel cells which employ forced electrolyte flow.

9. Use of a porous electrode according to Claims 1 to 3 in electrodialysis cells as hydrogen anode and hydrogen cathode, the hydrogen produced by the cathodic deposition being fed to the anode for electrochemical dissolution.

10. Use of a porous electrode according to Claims 1 to 3 in electrolysis cells as hydrogen and oxygen deposition electrode.

## Revendications

1. Electrode poreuse à gaz, notamment pour des électrolyseurs et des piles à combustible, électrode à la base de laquelle se trouve une structure de nickel Raney, liée par du polytétrafluoréthylène, électrode caractérisée en ce qu'elle constitue une feuille obtenue par laminage conjoint, avec un réseau tissé de nickel, d'un mélange à sec de polytétrafluoréthylène et de poudre de nickel Raney conservée à l'abri de l'oxydation par l'air.

2. Electrode poreuse selon la revendication 1, caractérisée en ce que la proportion en poids du polytétrafluoréthylène dans le mélange à sec est de 2 à 12%.

3. Electrode poreuse selon la revendication 1 ou 2, caractérisée en ce que la couche de nickel de Raney armée par un réseau est munie d'une couche supplémentaire poreuse de polytétrafluoréthylène appliquée par laminage.

4. Procédé pour la fabrication d'une électrode poreuse selon les revendications 1 à 3, caractérisé en ce que, dans un mélangeur à pales est réalisé un mélange à sec de polytétrafluoréthylène et de poudre de nickel Raney conservée à l'abri de l'oxydation par l'air, et que les particules du mélange sont soumises à l'effet de fragmentation supplémentaire des couteaux tranchants tournant rapidement d'une tête de coupe, ce mélange à sec étant transformé par laminage en une feuille mince au moyen d'un laminoir à poudre, et qu'enfin cette feuille est pressée dans un moulin à cylindres sur une bande de tissu métallique ou de métal déployé.

5. Procédé selon la revendication 4, caractérisé en ce que la vitesse périphérique des couteaux tournants est d'environ 25 m/sec ou davantage.

6. Mise en œuvre d'une électrode poreuse selon les revendications 1 à 3 dans l'élimination électrolytique ou catalytique des nitrates à partir de solutions aqueuses, notamment à partir des lessives de précipitation dans la fabrication des électrodes frittées.

7. Mise en œuvre d'une électrode poreuse selon les revendications 1 à 3 comme électrode de consommation d'hydrogène.

8. Mise en œuvre d'une électrode poreuse selon les revendications 1 à 2 dans des piles à combustible hydrogène/oxygène, fonctionnant avec circulation forcée de l'électrolyte.

9. Mise en œuvre d'une électrode poreuse selon les revendications 1 à 3 dans des cellules d'électro-dyalise comme anode d'hydrogène et cathode d'hydrogène, l'hydrogène prenant naissance du fait de la séparation cathodique étant alors amené à l'anode pour obtenir la dissolution électrochimique.

10. Mise en œuvre d'une électrode poreuse selon les revendications 1 à 3, dans des cellules d'électrolyse, comme électrodes de séparation d'hydrogène et d'oxygène.

Fig.1

Fig.2